# EUROPEAN PATENT SPECIFICATION

(11) **EP 2 630 376 B1**
(45) Date of publication and mention of the grant of the patent: **05.04.2023**
(21) Application number: 11809323.6
(22) Date of filing: 04.07.2011
(51) Int. Cl.: F04D 27/02, G05B 15/02, F04D 27/00

(54) **CONTROL OF A VARIABLE SPEED CENTRIFUGAL FAN THAT GENERATES UNDERPRESSURE**
STEUERUNG EINES DREHZAHLVARIABLEN ZENTRIFUGALGEBLÄSES, DAS UNTERDRUCK ERZEUGT
CONTRÔLE D'UN VENTILATEUR CENTRIFUGE À VITESSE VARIABLE GÉNÉRANT UNE DÉPRESSION

(30) Priority: 19.07.2010 FI 20105810
(43) Date of publication of application: 28.08.2013
(73) Proprietor: Runtech Systems Oy, 35990 Kolho (FI)
(72) Inventor: MUSSALO, Jouni, 48310 Kotka (FI); VUOHELAINEN, Mauri, 48400 Kotka (FI)
(74) Representative: Murgitroyd & Company
(86) International application number: PCT/FI2011/050633
(87) International publication number: WO 2012/010741

(56) References cited:
- EP-A2- 0 179 658
- EP-A2- 0 179 658
- DE-A1-102007 009 301
- DE-A1-102007 035 712
- JP-A- S64 394
- US-A- 4 452 585
- US-A- 4 581 900
- US-A- 5 894 736
- US-A1- 2003 057 904
- US-A1- 2008 188 173
- US-A1- 2009 252 617

## Description

The object of the invention is a method for controlling an automatic stall-prevention of regulated-rotation-speed low-pressure centrifugal fan as defined by claim 1. The invention also relates to a control program according to claim 5. Advantageous embodiments may include features of depending claims.

Numerous compressors and centrifugal fans of different types, depending on their various applications, are known in the art. Particularly in industry, centrifugal fans, compressors and radial fans are widely used to achieve a pressure difference in piping. A problem for all centrifugal fan is generally known to be stalling. In other words, stalling is a characteristic state for all centrifugal fans, which occurs when the volume flow rate is too small in relation to the speed of rotation of the impeller. In this case the angle of incidence between the flow and the blade changes to be so disadvantageous that the flow disengages from the surface of the blade. Backflow is then able to occur in the blade passage and the impeller loses its pressure-increasing ability.

In this way, cyclical pressure fluctuations are generated that excite the natural frequencies of the structure surrounding, among other things, the piping. Pressure fluctuations create fatigue loading in the piping and in the structures. In addition, the temperature of the flow can significantly rise when the impeller, via the losses, continuously gives thermal energy to the gas, but the effective flow can be very small.

Problems occur particularly in processes in which resistance to the flow greatly changes. When using a centrifugal fan for producing low pressure in these types of processes, a stalling state must be prevented by giving leakage air to the centrifugal fan in a controlled manner.

Conventionally, centrifugal fans that have a constant speed of rotation have been used. In this case stalling is prevented with an automatic leakage air valve, which receives control from the current of the drive motor of the centrifugal fan. In the stalling state the current of the drive motor is smaller than in the normal operating range. The electric current also fluctuates strongly. The control logic of the centrifugal fan can easily be programmed to detect a stalling state and to eliminate it by means of leakage air.

Another problem is that in a stalling state the low pressure also fluctuates with a rapid cycle, and this situation is detrimental from the viewpoint of the process. A device that has a regulated speed of rotation has been launched in the low-pressure centrifugal fan market as a new technology, the stall control of which cannot be implemented with conventional technology.

DE 10 2007 009301 A1 refers to a method for controlling the operation of a centrifugal pump, a centrifugal mixer, a radial fan or a centrifugal compressor, comprising the steps of deriving a sensorless flow value from a calibrated closedspeed versus closed-valve performance curve, comparing the actual flow rate value and a corrected flow rate threshold corrected on the basis of the pump speed and related to unfavorable operating conditions of the pump to determine the operating state of the pump and controlling the pump based on the comparison between the derived actual flow value and the corrected flow threshold.

EP 0 179 658 A2 discloses a surge control stem for dewatering press felts on a papermaking machine which includes a suction pipe, a variable speed driven motor, a centrifugal exhauster driven by the variable speed drive motor and connected to the suction pipe to provide vacuum to a felt passing over a slot for dewatering thereof. A surge valve is provided and is opened to admit air to the centrifugal exhauster so as to prevent surge when the centrifugal exhauster is operating at a predetermined level at which the centrifugal exhauster will surge.

What is essential in the present invention is that a device with a regulated rotation speed, and that is in itself prior art, can now be more precisely utilized. By means of this technology a solution is obtained with which a centrifugal fan can be implemented in which the prior-art problems described above do not occur. In addition, the efficiency of the different possibilities of a centrifugal fan can now be significantly enhanced and at the same time the operation of the whole apparatus can be optimized.

In the solution according to the invention the advantages of a centrifugal fan that has a regulated speed of rotation are now utilized more effectively. In this invention a new solution for stall control is presented, which also enables the stall prevention of a rotation-speed-regulated centrifugal fan. In addition, the solution prevents a centrifugal fan from ending up in a stall situation.

With the solution according to the invention, it is possible at the same time to implement applications that are considerably more versatile and more technically demanding. Thus the problems caused by prior art are avoided. The features essential to the invention significantly affect the stall-prevention and also the method defined in the claims. The solution according to the invention has many important advantages.

More precisely defined, the invention is characterized by what is specified in the claims.

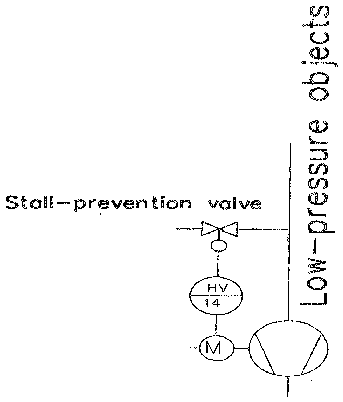

In the following, the invention will be described with reference to the attached drawing, wherein the drawing presents one preferred embodiment of the invention.

According to the figure, it is essential in the invention that the points between different flow quantities and the speeds of rotation corresponding to them when stalling starts, and more particularly when it ends, are determined by test-running and with measurements. With these data a limit or range can be mathematically interpolated when lapsing into a stall is evident. Moving to this limit or into this range is prevented by giving more flow to the centrifugal fan from outside the actual intake object as leakage air or, alternatively, from a second intake object. Additional flow is given after an adjustable mathematical safety limit has been exceeded and the additional flow is reduced after falling below a second mathematical limit. These limits follow each other at a distance from each other, which distance is set by the adjustable hysteresis factor.

The speed of rotation of the centrifugal fan is measured constantly with a frequency converter or with a separate measuring apparatus. The flow of air is calculated by means of the electric current and voltage going to the motor of the centrifugal fan, as well as by means of the temperature and pressure of the flow, or with a separate measuring apparatus designed for it.

The control program controls the valve that adjusts the additional flow on the basis of the aforementioned measured data and calculated stalling limit.

A calculated stall curve is defined for each centrifugal fan in the commissioning of it and with its actual piping. In this way stalling points at different speeds are sought, and the voltage and electric current are measured after coming out of the stall, at the same time checking whether it is possible to stay outside a stalling state. The flow resistance of the piping is adjusted from the most final point possible such that all the air volume of the pipe is included when determining the points. The factors in the formula below are determined from these points. The final adjustment is made after programming the curve and then the final variable of the quadratic equation, with which variable the curve can be raised or lowered, is changed. In this way the most precise operation possible is achieved for the valve.

When the stalling point is approached, the valve is opened and when the situation normalizes the valve is closed. A stalling state is detected from the voltage, current and frequency. In between is a small differential gap in which nothing is done. This prevents unnecessary to-and-fro control of the valve.

Programming for the automation system of the process is most preferably implemented as follows:
Control of stall-prevention valve (HV14)

A stalling state of the centrifugal fan is detected from a function of the current, voltage and frequency going to the motor. According to the calculated result, the stall-prevention valve is either opened or closed according to the need. In addition, the effect of the temperature of the flow is taken into account in the formula.

### Example:

If U·I·N·(Tk/Tp)²/1000 < 0,0032.F² + 0,1099·F + 10,15, the valve is opened e.g. 5%, if the valve is not already fully open (100%).

If U·I·N² ·(Tk/Tp)²/1000 > 0,0032·F² + 0,1099·F + 10,15, the valve is closed e.g. 5%, if the valve is not already fully closed (0%).

The valve control is repeated e.g. at intervals of 5 seconds or of another applicable time.
U = Supply voltage of motor from frequency converter [V]
I = Supply current of motor from frequency converter [A]
F = Supply frequency of motor current [Hz]
N = Hysteresis adjustment factor
Tk = Temperature in test conditions [K]
Tp = Temperature of intake air [K]

The formulas modeling the stalling limit that are presented above are mathematical examples. Instead of the quadratic equation presented, other mathematical equations that are known in the art can, of course, also be used for modeling the stalling limit. What is at issue here are the mathematical graphs fitted to measured pairs of points, the forms of which graphs vary case by case. Therefore the formulas presented are just one example.

It is obvious to the person skilled in the art that the invention is not limited to the embodiments presented above, but that it can be varied within the scope of the claims presented below.

## Claims

1. Method for controlling an automatic stall-prevention of a rotation-speed-regulated centrifugal fan, wherein points when stalling starts, and more particularly when it ends, are determined by different flow quantities and by the speeds of rotation corresponding to them by test-running and by measuring, wherein a speed of rotation of the centrifugal fan is measured constantly with a frequency converter or with a separate measuring apparatus, and the flow of air is calculated by means of the electric current and voltage going to the motor of the centrifugal fan as well as by means of the temperature and pressure of the flow, with these data a limit or range when lapsing into a stall is evident is mathematically interpolated by a function of the current, voltage and frequency going to the motor of the centrifugal fan in the form of a first mathematical safety limit and a second mathematical safety limit, a distance between these limits being set by an adjustable hysteresis factor, a control program is executed by means of an automation system of a process, in which control program stalling is detected based on the function, wherein the control program controls a valve that regulates additional flow from outside the intake as leakage air or from a second intake to the rotation-speed-regulated centrifugal fan by giving additional flow after the first mathematical safety limit has beer exceeded and reducing the additional flow after falling below the second mathematical safety limit.

2. Method according to claim 1,
**characterized in that**
when the stalling point is approached, the valve is opened and when the situation normalizes, the valve is closed.

3. Method according to claim 1 or 2,
**characterized in that**
in the method the function is defined preferably such that when
U·I·N·(Tk/Tp)²/1000 < 0,0032·F² +0,1099-F + 10,15, the valve is opened e.g. 5%, if the valve is not already fully open (100%), and when U·I·N^{2·}(Tk/Tp)²/1000 > 0,0032·F² + 0,1099.F + 10,15, the valve is closed e.g. 5%, if the valve is not already fully closed (0%),
wherein
U is the supply voltage of the motor from the frequency converter [V], I the supply current of the motor from the frequency convert [A],
F the supply frequency of the motor current [Hz],
N the hysteresis adjustment factor,
Tk a temperature in test conditions [K], and
Tp a temperature of the intake air [K].

4. Method according to claim 1, 2 or 3, **characterized in that** in the method the valve is controlled cyclically such that a control cycle is in the range 1 - 10 seconds, most preferably at intervals of 5 seconds.

5. Control program for an automatic stall-prevention of a rotation-speed-regulated centrifugal fan, the control program being such that, when it is executed by an automation system of a process which is connected to and controls the fan and a valve that regulates additional flow from outside the intake as leakage air or from a second intake to the fan, the control program detects stalling from a function of the current, voltage and frequency going to the motor of the centrifugal fan, wherein points when stalling starts, and more particularly when it ends, were determined by different flow quantities and by the speeds of rotation corresponding to them by test-running and by measuring, wherein a speed of rotation of the centrifugal fan was measured constantly with a frequency converter or with a separate measuring apparatus, and the flow of air was calculated by means of the electric current and voltage going to the motor of the centrifugal fan as well as by means of the temperature and pressure of the flow, with these data a limit or range when lapsing into a stall is evident was mathematically interpolated by the function of the current, voltage and frequency going to the motor of the centrifugal fan in the form of a first mathematical safety limit and a second mathematical safety limit, a distance between these limits being set by an adjustable hysteresis factor, and the control program controls the valve such that additional flow is given after the first mathematical safety limit has been exceeded and additional flow is reduced after falling below the second mathematical safety limit.

6. Control program according to claim 5,
**characterized in that**
when the stalling point is approached, the valve is opened and when the situation normalizes, the valve is closed.

7. Control program according to claim 5 or 6,
**characterized in that**
the function is defined such that when
U·I·N·(Tk/Tp)²/1000 < 0,0032·F² +0,1099-F + 10,15, the valve is opened e.g. 5%, if the valve is not already fully open (100%), and when
U·I·N²·(Tk/Tp)²/1000 > 0,0032·F² + 0,1099-F + 10,15, the valve is closed e.g. 5%, if the valve is not already fully closed (0%),
wherein
U is the supply voltage of the motor from the frequency converter [V],
I the supply current of the motor from the frequency converter [A],
F the supply frequency of the motor current [Hz],
N the hysteresis adjustment factor,
Tk a temperature in test conditions [K], and
Tp a temperature of the intake air [K].

8. Control program according to claim 5, 6 or 7,
**characterized in that**
the valve is controlled cyclically such that a control cycle is in the range 1 - 10 seconds, most preferably at intervals of 5 seconds.

## Patentansprüche

1. Ein Verfahren zum Steuern einer automatischen Strömungsabrissprävention eines Zentrifugalgebläses mit regulierter Rotationsgeschwindigkeit, wobei:
Punkte, wenn Strömungsabriss beginnt und insbesondere wenn er endet, durch unterschiedliche Durchflussmengen und durch die damit korrespondierenden Rotationsgeschwindigkeiten durch Durchführen von Tests und durch Messen bestimmt werden, wobei eine Rotationsgeschwindigkeit des Zentrifugalgebläses mit einem Frequenzwandler oder mit einer separaten Messvorrichtung konstant gemessen wird und die Luftströmung mittels des elektrischen Stroms und der Spannung, die zu dem Motor des Zentrifugalgebläses fließen, sowie mittels der Temperatur und des Drucks der Strömung berechnet wird,
mit diesen Daten eine Grenze oder ein Bereich, wenn das Verfallen in einen Strömungsabriss offensichtlich ist, durch eine Funktion des Stroms, der Spannung und
der Frequenz, die zu dem Motor des Zentrifugalgebläses fließen, in der Form einer ersten mathematischen Sicherheitsgrenze und einer zweiten mathematischen Sicherheitsgrenze mathematisch interpoliert wird, wobei ein Abstand zwischen diesen Grenzen durch einen anpassbaren Hysteresefaktor vorgegeben wird,
ein Steuerungsprogramm mittels eines Automatisierungssystems eines Vorgangs ausgeführt wird, in welchem Steuerungsprogramm basierend auf der Funktion ein Strömungsabriss erkannt wird, wobei das Steuerungsprogramm ein Ventil steuert, das durch Zugeben zusätzlicher Strömung, nachdem die erste mathematische Sicherheitsgrenze überschritten wurde, und durch Verringern der zusätzlichen Strömung nach dem Fallen unter die zweite mathematische Sicherheitsgrenze zusätzliche Strömung von außerhalb des Einlasses als Leckluft oder von einem zweiten Einlass in das Zentrifugalgebläse mit regulierter Rotationsgeschwindigkeit reguliert.

2. Verfahren gemäß Anspruch 1,
**dadurch gekennzeichnet, dass**,
wenn der Strömungsabrisspunkt erreicht wird, das Ventil geöffnet wird und, wenn sich die Situation normalisiert, das Ventil geschlossen wird.

3. Verfahren gemäß Anspruch 1 oder 2,
**dadurch gekennzeichnet, dass**
in dem Verfahren die Funktion vorzugsweise so definiert ist, dass, wenn U•I•N•(Tk/Tp)²/1000 < 0,0032•F² + 0,1099•F + 10,15, das Ventil z. B. um 5 % geöffnet wird, wenn das Ventil nicht schon vollständig geöffnet ist (100 %),
und wenn U•I•N²•(Tk/Tp)²/1000 > 0,0032•F² + 0,1099•F + 10,15, das Ventil z. B. um 5 % geschlossen wird, wenn das Ventil nicht schon vollständig geschlossen ist (0 %), wobei
U die Netzspannung des Motors von dem Frequenzwandler ist [V],
I der Netzstrom des Motors von dem Frequenzwandler ist [A],
F die Netzfrequenz des Motorstroms ist [Hz],
N der Hystereseanpassungsfaktor ist,
Tk eine Temperatur unter Prüfbedingungen ist [K], und
Tp eine Temperatur der Einlassluft ist [K].

4. Verfahren gemäß Anspruch 1, 2 oder 3,
**dadurch gekennzeichnet, dass** das Ventil in dem Verfahren zyklisch gesteuert wird, sodass ein Steuerungszyklus in dem Bereich von 1-10 Sekunden liegt, vorzugsweise in Zeitabständen von 5 Sekunden.

5. Ein Steuerungsprogramm für eine automatische Strömungsabrissprävention eines Zentrifugalgebläses mit regulierter Rotationsgeschwindigkeit, wobei das Steuerungsprogramm solcherart ist, dass, wenn es von einem Automatisierungssystem eines Vorgangs ausgeführt wird, das mit dem Gebläse und einem Ventil, das zusätzliche Strömung von außerhalb des Einlasses als Leckluft oder von einem zweiten Einlass in das Gebläse reguliert, verbunden ist und diese steuert, das Steuerungsprogramm Strömungsabriss an einer Funktion des Stroms, der Spannung und der Frequenz, die zu dem Motor des Zentrifugalgebläses fließen, erkennt, wobei Punkte, wenn Strömungsabriss beginnt und insbesondere wenn er endet, durch unterschiedliche Durchflussmengen und durch die damit korrespondierenden Rotationsgeschwindigkeiten durch Durchführen von Tests und durch Messen bestimmt wurden, wobei eine Rotationsgeschwindigkeit des Zentrifugalgebläses mit einem Frequenzwandler oder mit einer separaten Messvorrichtung konstant gemessen wurde und die Luftströmung mittels des elektrischen Stroms und der Spannung, die zu dem Motor des Zentrifugalgebläses fließen, sowie mittels der Temperatur und des Drucks der Strömung berechnet wurde,
wobei mit diesen Daten eine Grenze oder ein Bereich, wenn das Verfallen in einen Strömungsabriss offensichtlich ist, durch die Funktion des Stroms, der Spannung und der Frequenz, die zu dem Motor des Zentrifugalgebläses fließen, in der Form einer ersten mathematischen Sicherheitsgrenze und einer zweiten mathematischen Sicherheitsgrenze mathematisch interpoliert wurde, wobei ein Abstand zwischen diesen Grenzen durch einen anpassbaren Hysteresefaktor vorgegeben wird,
und wobei das Steuerungsprogramm das Ventil steuert, sodass zusätzliche Strömung zugegeben wird, nachdem die erste mathematische Sicherheitsgrenze überschritten wurde, und zusätzliche Strömung nach dem Fallen unter die zweite mathematische Sicherheitsgrenze verringert wird.

6. Steuerungsprogramm gemäß Anspruch 5,
**dadurch gekennzeichnet, dass**,
wenn der Strömungsabrisspunkt erreicht wird, das Ventil geöffnet wird und, wenn sich die Situation normalisiert, das Ventil geschlossen wird.

7. Steuerungsprogramm gemäß Anspruch 5 oder 6,
**dadurch gekennzeichnet, dass**
die Funktion so definiert ist, dass, wenn
U•I•N•(Tk/Tp)²/1000 < 0,0032•F² + 0,1099•F + 10,15, das Ventil z. B. um 5 % geöffnet wird, wenn das Ventil nicht schon vollständig geöffnet ist (100 %),
und wenn U•I•N²•(Tk/Tp)²/1000 > 0,0032•F² + 0,1099•F + 10,15, das Ventil z. B. um 5 % geschlossen wird, wenn das Ventil nicht schon vollständig geschlossen ist (0 %), wobei
U die Netzspannung des Motors von dem Frequenzwandler ist [V],
I der Netzstrom des Motors von dem Frequenzwandler ist [A],
F die Netzfrequenz des Motorstroms ist [Hz],
N der Hystereseanpassungsfaktor ist,
Tk eine Temperatur unter Prüfbedingungen ist [K], und
Tp eine Temperatur der Einlassluft ist [K].

8. Steuerungsprogramm gemäß Anspruch 5, 6 oder 7,
**dadurch gekennzeichnet, dass**
das Ventil zyklisch gesteuert wird, sodass ein Steuerungszyklus in dem Bereich von 1-10 Sekunden liegt, vorzugsweise in Zeitabständen von 5 Sekunden.

## Revendications

1. Procédé pour contrôler une prévention de décrochage automatique d'un ventilateur centrifuge à vitesse de rotation régulée,
où des points auxquels un décrochage commence, et plus particulièrement auxquels il finit, sont déterminés par différentes quantités de flux et par les vitesses de rotation leur correspondant par réalisation de test et par mesurage, où une vitesse de rotation du ventilateur centrifuge est mesurée de manière constante avec un convertisseur de fréquence ou avec un appareil de mesurage distinct, et le flux d'air est calculé au moyen du courant électrique et de la tension allant au moteur du ventilateur centrifuge ainsi qu'au moyen de la température et de la pression du flux,
avec ces données une limite ou gamme où l'entrée en décrochage est évidente est interpolée de manière mathématique par une fonction du courant, de la tension et de la fréquence allant au moteur du ventilateur centrifuge sous la forme d'une première limite de sécurité mathématique et d'une deuxième limite de sécurité mathématique, une distance entre ces limites étant définie par un facteur d'hystérésis ajustable,
un programme de contrôle est exécuté au moyen d'un système d'automatisation d'un processus, programme de contrôle dans lequel un décrochage est détecté sur la base de la fonction, où le programme de contrôle contrôle une vanne qui régule un flux additionnel provenant de l'extérieur de l'admission en tant qu'air de fuite ou provenant d'une deuxième admission vers le ventilateur centrifuge à vitesse de rotation régulée en donnant un flux additionnel après que la première limite de sécurité mathématique a été dépassée et en réduisant le flux additionnel après être retombé sous la deuxième limite de sécurité mathématique.

2. Procédé selon la revendication 1,
**caractérisé en ce que**
lorsque l'on se rapproche du point de décrochage, la vanne est ouverte et lorsque la situation se normalise, la vanne est fermée.

3. Procédé selon la revendication 1 ou la revendication 2,
**caractérisé en ce que**
dans le procédé la fonction est définie préférablement de telle sorte que lorsque U•I•N•(Tk/Tp)²/1000 < 0,0032•F² +0,1099•F + 10,15, la vanne est ouverte par ex. de 5 %, si la vanne n'est pas déjà complètement ouverte (100 %),
et lorsque U•I•N²•(Tk/Tp)²/1000 > 0,0032•F² +0,1099•F + 10,15, la vanne est fermée par ex. de 5 %, si la vanne n'est pas déjà complètement fermée (0 %),
où
U est la tension d'alimentation du moteur provenant du convertisseur de fréquence [V],
I le courant d'alimentation du moteur provenant du convertisseur de fréquence [A],
F la fréquence d'alimentation du courant de moteur [Hz],
N le facteur d'ajustement d'hystérésis,
Tk une température dans des conditions de test [K], et
Tp une température de l'air d'admission [K].

4. Procédé selon la revendication 1, la revendication 2 ou la revendication 3,
**caractérisé en ce que** dans le procédé la vanne est contrôlée de manière cyclique de telle sorte qu'un cycle de contrôle soit compris dans la gamme de 1 à 10 secondes, le plus préférablement à des intervalles de 5 secondes.

5. Programme de contrôle pour une prévention de décrochage automatique d'un ventilateur centrifuge à vitesse de rotation régulée, le programme de contrôle étant tel que, lorsqu'il est exécuté par un système d'automatisation d'un processus qui est raccordé à et contrôle le ventilateur et une vanne qui régule un flux additionnel provenant de l'extérieur de l'admission en tant qu'air de fuite ou provenant d'une deuxième admission vers le ventilateur, le programme de contrôle détecte un décrochage d'après une fonction du courant, de la tension et de la fréquence allant au moteur du ventilateur centrifuge,
où des points auxquels un décrochage commence, et plus particulièrement auxquels il finit, ont été déterminés par différentes quantités de flux et par les vitesses de rotation leur correspondant par réalisation de test et par mesurage, où une vitesse de rotation du ventilateur centrifuge a été mesurée de manière constante avec un convertisseur de fréquence ou avec un appareil de mesurage distinct, et le flux d'air a été calculé au moyen du courant électrique et de la tension allant au moteur du ventilateur centrifuge ainsi qu'au moyen de la température et de la pression du flux,
avec ces données une limite ou gamme où l'entrée en décrochage est évidente a été interpolée de manière mathématique par la fonction du courant, de la tension et de la fréquence allant au moteur du ventilateur centrifuge sous la forme d'une première limite de sécurité mathématique et d'une deuxième limite de sécurité mathématique, une distance entre ces limites étant définie par un facteur d'hystérésis ajustable,
et le programme de contrôle contrôle la vanne de telle sorte qu'un flux additionnel est donné après que la première limite de sécurité mathématique a été dépassée et qu'un flux additionnel est réduit après être retombé sous la deuxième limite de sécurité mathématique.

6. Programme de contrôle selon la revendication 5,
**caractérisé en ce que**
lorsque l'on se rapproche du point de décrochage, la vanne est ouverte et lorsque la situation se normalise, la vanne est fermée.

7. Programme de contrôle selon la revendication 5 ou la revendication 6,
**caractérisé en ce que**
la fonction est définie de telle sorte que lorsque U•I•N•(Tk/Tp)²/1000 < 0,0032•F² +0,1099•F + 10,15, la vanne est ouverte par ex. de 5 %, si la vanne n'est pas déjà complètement ouverte (100 %),
et lorsque U•I•N²•(Tk/Tp)²/1000 > 0,0032•F² +0,1099•F + 10,15, la vanne est fermée par ex. de 5 %, si la vanne n'est pas déjà complètement fermée (0 %),
où
U est la tension d'alimentation du moteur provenant du convertisseur de fréquence [V],
I le courant d'alimentation du moteur provenant du convertisseur de fréquence [A],
F la fréquence d'alimentation du courant de moteur [Hz],
N le facteur d'ajustement d'hystérésis,
Tk une température dans des conditions de test [K], et
Tp une température de l'air d'admission [K].

8. Programme de contrôle selon la revendication 5, la revendication 6 ou la revendication 7,
**caractérisé en ce que**
la vanne est contrôlée de manière cyclique de telle sorte qu'un cycle de contrôle soit compris dans la gamme de 1 à 10 secondes, le plus préférablement à des intervalles de 5 secondes.
